# FASCICULE DE BREVET EUROPEEN

(11) **EP 0 609 135 B1**
(45) Date de publication et mention de la délivrance du brevet: **08.10.1997**
(21) Numéro de dépôt: 94400153.6
(22) Date de dépôt: 25.01.1994
(51) Int. Cl.: H01R 25/16, H04Q 1/14

(54) **Réglette précâblée de raccordement**
Vorverdrahtete Anschlussklemmleiste
Pre-wired terminal block

(30) Priorité: 29.01.1993 FR 9300956
(43) Date de publication de la demande: 03.08.1994
(73) Titulaire: ALCATEL ALSTHOM COMPAGNIE GENERALE D'ELECTRICITE, 75008 Paris (FR)
(72) Inventeur: Audeval, Fabrice, F-08000 Charleville Mézières (FR); Weber, Hervé, F-08000 Charleville Mézières (FR)
(74) Mandataire: BUFFIERE, Michèle

(56) Documents cités:
- EP-A- 0 489 642
- FR-A- 2 600 825
- GB-A- 2 140 221

## Description

La présente invention concerne les dispositifs de raccordement, appelés réglettes de raccordement et utilisés dans les répartiteurs téléphoniques, assurant le brassage des raccordements entre un ou plusieurs câbles de ligne et un câble de liaison d'un autocommutateur. Elle porte plus particulièrement sur une réglette précâblée de raccordement.

D'une manière générale ces réglettes permettent du côté du ou des câbles de ligne l'éclatement de leurs paires et le raccordement de celles-ci à des jarretières et du côté de l'autocommutateur l'éclatement des paires du câble de liaison et leur raccordement aux jarretières précitées. Ces jarretières sont reçues par une face dite avant des réglettes pour les raccordements souhaités et les modifications des raccordements aux paires des câbles.

Le document FR-A-2670 332 décrit une réglette de raccordement précâblable. Cette réglette précâblable comporte un corps isolant en deux parties l'une avant, dite bloc de raccordement et affectée aux jarretières et l'autre dite socle de fixation et affectée au câble concerné. Ce bloc et ce socle sont séparables et assemblables l'un à l'autre. Ils sont tous deux équipés de contacts couplés individuellement d'une partie à l'autre dans leur zone d'interface d'assemblage quand ils sont assemblés.

Les contacts du socle sont de forme globale en U, dont l'une des branches, en retrait dans le socle sur l'interface d'assemblage et accessible sur la face intérieure correspondante du socle, forme une fourche autodénudante et l'autre branche forme une queue élastique de couplage à l'un des contacts du bloc dans l'interface d'assemblage. Les contacts montés dans le bloc sont traversants. Ils définissent une queue complémentaire de couplage élastique dans l'interface d'assemblage et une fourche autodénudante dans la face opposée avant.

Selon le côté d'utilisation de la réglette, les paires du câble de ligne sont raccordées sur site aux fourches autodénudantes des contacts du socle, ou celles du câble de liaison peuvent être raccordées sur site ou précâblées en usine sur les fourches autodénudantes des contacts du socle.

Cette réglette ou plus spécifiquement son socle présente en outre des fenêtres latérales d'accès à ses contacts pour le raccordement possible à chacun d'eux d'un circuit extérieur, tel qu'un surtenseur de protection équipé d'un frotteur de liaison à travers la fenêtre d'accès ou d'un circuit de protection auxiliaire à frotteur de liaison analogue.

Cette réglette reste de réalisation relativement complexe, du fait de ses contacts différents dans son socle et son boîtier, de l'assemblage du socle et du boîtier et du mode de raccordement de ses éventuels circuits extérieurs de protection.

On connait du document GB-A-2 140 221 une réglette de raccordement téléphonique constituée d'un système modulaire regroupant dans deux modules séparés arrangés en série un ensemble de connecteurs de câbles et un ensemble respectif de connecteurs de jarretière, chacun des modules présentant des orifices communiquant en ligne pour le montage de modules de protection individuels reliant électriquement une paire respective de connecteurs de câble à une paire respective de connecteurs de jarretière.

La présente invention a pour but de réaliser une réglette de conception nouvelle, dite réglette précâblée, et de permettre avantageusement en outre d'y intégrer les éventuels circuits précités de protection.

Elle a pour objet une réglette précâblée de raccordement, comportant un corps isolant à l'intérieur duquel sont réalisés les raccordements des paires d'au moins un câble à des jarretières, par couplage de couples de premiers contacts auxquels sont reliées les paires et de couples de deuxièmes contacts auxquels sont reliées les jarretières, et pouvant comporter des circuits de protection des paires reliées aux jarretières, caractérisée en ce qu'elle comporte:
- des connecteurs de câble, chacun comportant n desdits couples de premiers contacts, montés dans un bloc isolant et accessibles selon n couples identiques de points d'enfichage sur ledit bloc, et recevant n desdites paires précâblées sensiblement à l'opposé desdits points d'enfichage,
- des connecteurs de jarretière, chacun comportant l'un desdits couples de deuxièmes contacts, monté dans un boîtier isolant et accessible complémentairement à l'un desdits couples de points d'enfichage, et recevant l'une desdites jarretières précâblée dans le boiter sur ce couple de deuxièmes contacts,
- ledit corps isolant, formé d'un coffret parallélépipédique de rangement desdits connecteurs de jarretière dans une partie avant dudit coffret, ouverte sur une première face correspondante, dite avant, et desdits connecteurs de câble sélectivement dans l'une des parties dites intermédiaire et arrière dudit coffret, communiquantes l'une avec l'autre et ladite partie avant, pour l'enfichage direct ou indirect des connecteurs de jarretière sur les connecteurs de câble,
- les possibles circuits de protection série, chacun réalisé sur une carte, en étant ainsi affecté à la protection série d'au moins l'une des paires, et chacun équipé de deux connecteurs terminaux, opposés sur la carte et comportant autant de couples de troisièmes, respectivement quatrièmes, contacts, que de paires à protéger, reliés aux circuits de la carte et accessibles frontalement, en étant l'un complémentaire de l'autre et du même nombre desdits couples de points d'enfichage, lesdits premiers circuits de protection série étant susceptibles d'être montés dans ladite partie intermédiaire, pour leur enfichage sur les connecteurs de câble alors déjà en place dans ladite partie arrière et pour l'enfichage sur eux des connecteurs de jarretière reçus dans ladite partie avant.

La réglette selon l'invention peut avantageusement en outre présenter au moins l'une des caractéristiques additionnelles suivantes:
- le corps isolant est cloisonné, depuis ladite face avant ouverte jusqu'à une deuxième face opposée arrière, en compartiments identiques, séparés par des cloisons, divisés selon lesdites parties avant, intermédiaire et arrière, qu'ils définissent ensemble, et ouverts en outre en regard desdites parties intermédiaire et arrière sur une troisième face du corps isolant.
- une protection électromagnétique extérieure entoure totalement ledit corps isolant, à l'exception de ladite face avant de celui-ci, est équipée d'une entrée arrière de câble, et est montée ouvrante au moins en regard de ladite troisième face dudit corps isolant.
- un contact supplémentaire dit de masse est associé à chacun desdits couples de contacts des connecteurs de câble, des connecteurs de jarretière et des connecteurs terminaux des circuits de protection série et est accessible avec le couple de contacts sur le connecteur correspondant, en formant un jeu complémentaire de l'un des connecteurs à l'un des autres s'y enfichant.
- chaque connecteur de câble comporte en outre un peigne de masse, retenu sur ledit bloc isolant, à l'opposé desdits points d'enfichage et raccordé d'une part aux contacts de masse associés aux couples individuels de premiers contacts et d'autre part à ladite protection électromagnétique extérieure
- chaque connecteur de jarretière comporte en outre deux varistances montées dans ledit boîtier et chacune reliée entre l'un des contacts du couple de deuxièmes contacts et le contact de masse associé.
- des barrettes avant sont prévues sur ladite partie avant, à raison d'au moins une barrette par compartiment, et sont affectées au montage desdits connecteurs de jarretière dans une position d'attente de connexion et une position de connexion dans ladite partie avant du corps isolant.
- les barrettes avant présentent des fentes, et chaque connecteur de jarretière présente une patte, saillante sur ledit boîtier et reçue dans l'une des fentes des barrettes avant, et une butée de fin de course de la patte dans la fente, pour la position de connexion du connecteur de jarretière.
- le boîtier de chaque connecteur de jarretière est en deux parties assemblables, l'une fixe et l'autre mobile, cette partie mobile constituant un outil de raccordement des fils de la jarretière aux contacts intérieurs au boîtier.

Les caractéristiques et avantages de la présente invention ressortiront de la description faite ci-après en regard d'un exemple de réalisation illustré dans les dessins ci-annexés. Dans ces dessins:
- la figure 1 est une vue en perspective illustrant une réglette selon l'invention, montrée partiellement équipée,
- la figure 2 est une vue en perspective éclatée de la réglette non équipée,
- la figure 3 est un autre vue en perspective, montrant un corps isolant, les différents types de connecteurs et un éventuel circuit de protection de la réglette,
- les figures 4 et 5 sont deux vues en perspective, recto et verso, illustrant un connecteur de câble de ladite réglette,
- les figures 6 et 7 sont deux vues en perspective, recto et verso illustrant un connecteur de jarretière de ladite réglette, montré avec un couvercle non fermé,
- les figures 8 à 11 sont des vues en perspective, illustrant recto et verso des parties constitutives du corps du connecteur de jarretière,
- la figure 12 illustre schématiquement l'un des circuits de protection que peut recevoir la réglette,
- les figures 13 et 14 illustrent l'un des contacts montés dans les connecteurs de câble et de jarretière et les circuits de protection,

Les figures 15 et 16 illustrent le raccordement d'un connecteur de jarretière sur un connecteur de câble, pour les deux niveaux du raccordement réalisé.

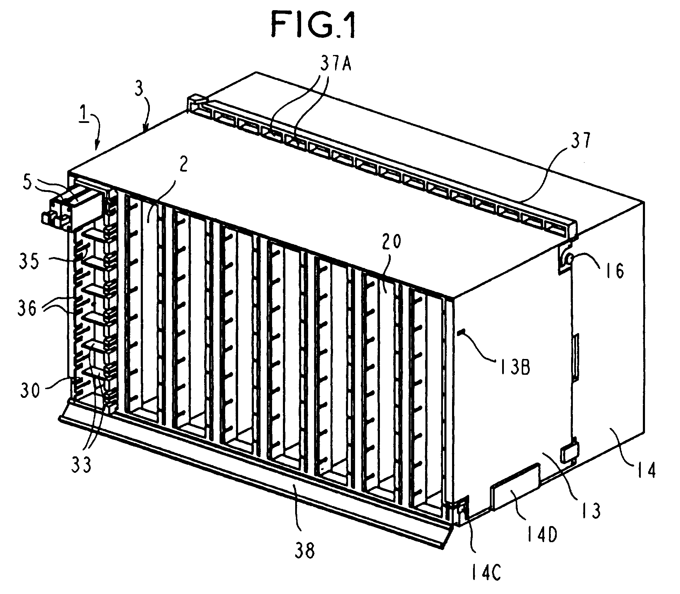

La description générale de la réglette selon l'invention est faite ci-après en regard des figures 1 à 3, pour une réglette de 128 paires, illustrée partiellement ou pas équipée dans ces figures et considérée dans ses conditions normales d'exploitation sur un répartiteur. Bien entendu une réglette analogue peut être affectée à un nombre de paires différent.

La réglette est dite horizontale. Elle comporte:
- un châssis 1, parallélépipédique, comportant lui-même un corps isolant 2 et une protection électromagnétique extérieure 3, montée sur le corps isolant qu'elle recouvre à l'exception de la face avant de celui-ci,
- des connecteurs de câble 4, ici au nombre de 16, qui sont affectés chacun à 8 paires du ou des câbles desservant la réglette, et sont montés dans le corps isolant 2,
- des connecteurs de jarretière 5, ici au nombre de 128, qui sont affectés chacun à une jarretière, sont montés par la face avant dans une partie avant 6 du corps isolant 2, se raccordent directement ou non, selon le cas, aux connecteurs de câble 4 et assurent le raccordement des paires individuelles aux jarretières et avantageusement en outre une protection dite parallèle des paires individuelles ainsi raccordées, et
- éventuellement des circuits de protection de type série 7, au nombre de 64, qui assurent chacun une protection supplémentaire des paires raccordées aux jarretières et sont montés intercalés entre les connecteurs de câble et les connecteurs de jarretière, à l'intérieur du corps isolant, en les raccordant.

Le ou les câbles et les jarretières desservant la réglette n'ont pas été illustrés dans ces figures, pour éviter les surcharges correspondantes.

Cette réglette de raccordement, peut être montée du côté d'un autocommutateur, auquel cas les éventuels circuits de protection 7 portent des éléments de protection électromagnétique supplémentaire de filtrage radiofréquence, ou être montée du côté du ou des câbles de ligne, auquel cas les circuits de protection 7 portent de préférence des parafoudres.

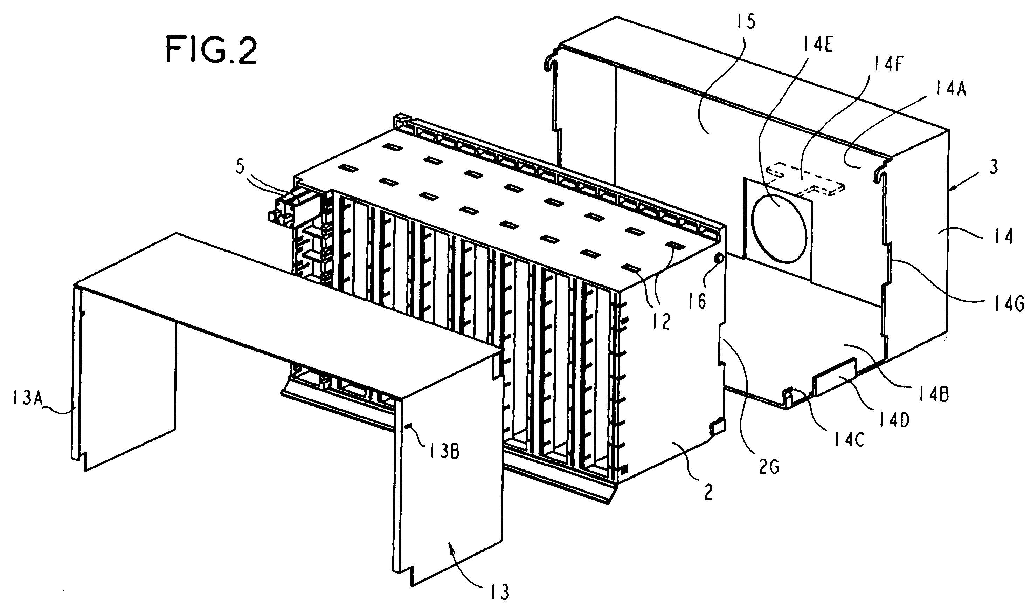

La protection électromagnétique 3 est précisée en regard des figures 1 et 2.

Elle est composée d'un carter 13 et d'un capot arrière 14, tous deux métalliques.

Le carter 13 est amovible sur le corps isolant et monté par la face avant de celui-ci. Il est en U et recouvre sa face supérieure et ses deux faces latérales. Il est positionné par butée de deux rebords latéraux avant 13A contre les bords latéraux avant du corps isolant. Il est retenu en place par des points de clipsage tels que 13B. Il est mis à la masse par le capot 14.

Le capot arrière 14 présente un fond 14A et quatre parois saillantes sur le fond, dont celle inférieure 14B, seule référencée, est largement saillante sur les trois autres pour recouvrir la face inférieure du corps isolant. Il prolonge le carter sur l'arrière du corps isolant en y définissant un compartiment arrière 15.

Il est monté articulé sur deux doigts d'attache 16, prévus sur les faces latérales du corps isolant, sensiblement dans le prolongement du bord supérieur de sa face arrière, et laissés accessibles par le carter. Il est retenu sur le corps isolant et/ou sur le carter par des pattes de clipsage et de maintien, telles que 14C et par des pattes de contact de masse telles que 14D.

Le capot présente en outre un passage 14E sur son fond arrière pour le ou les câbles desservant la réglette. Ces câbles sont retenus sur une patte de fixation 14F prévue sur l'extérieur du fond à proximité du passage 14E, avec une connexion de leur écran de masse au capot faite à ce niveau. Ils sont éclatés dans le compartiment 15 en paires reliées aux connecteurs de câble 4.

Une échancrure 14G, sensiblement à mi-hauteur du bord des deux parois latérales de ce capot, correspond à un logement en creux noté 2G sur la face arrière du corps isolant. Ce logement sert au montage d'un plat de fixation non représenté, qui se fixe sur une lyre de répartiteur.

Le corps isolant est également précisé en regard de ces figures 1 à 3.

Il est en matière plastique, de forme parallélépipédique et de préférence monobloc. Il constitue un simple coffret de rangement recevant les connecteurs de câble et de jarretière et les éventuels circuits de protection série, précités.

Ce corps isolant est divisé en 8 compartiments identiques 20, s'étendant sur toute sa hauteur et toute sa profondeur, par des cloisons 21. Les compartiments 20 sont totalement ouverts sur la face avant du corps isolant et sur sa face inférieure, à l'exception de la seule partie terminale avant 22 de cette face inférieure. Ils sont partiellement ouverts sur la face arrière du corps isolant, au moins sur la partie inférieure de celle-ci réduite, à ce niveau, à des rebords arrière 23 de part et d'autre des cloisons et d'un seul côté des parois latérales du corps isolant. Ils sont par ailleurs totalement fermés, ceci à des ajours 12 près prévus en deux rangées sur la face supérieure du corps isolant en regard de chaque compartiment 20.

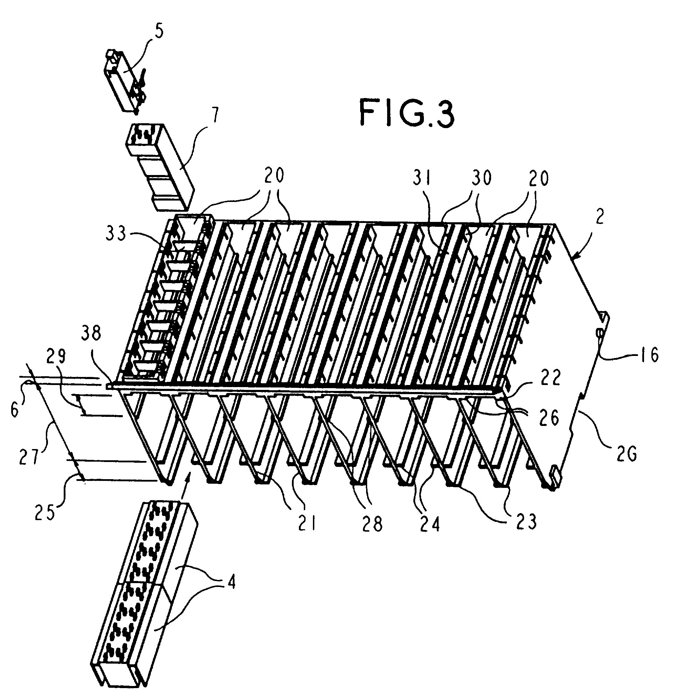

Les compartiments 20 sont eux-mêmes redivisés identiquement en profondeur, en redivisant en correspondance le corps isolant pour la mise en place des connecteurs de câble, des éventuels circuits de protection série, et des connecteurs de jarretière. A cet effet, les deux cloisons 21 ou la cloison et la paroi latérale, délimitant chaque compartiment, présentent intérieurement pour ce compartiment, ainsi qu'indiqué dans la figure 3:
- une paire de glissières 24, relativement arrière, à l'arrière de laquelle est limitée une partie arrière 25, par la face arrière du corps isolant, pour une mise en place possible des connecteurs de câble 4,
- une paire de glissières relativement avant 26, définie par des épaulements latéraux de la partie avant 6, qui délimite entre elle et la paire de glissières 24, une partie intermédiaire 27 pour une éventuelle mise en place des circuits de protection série 7,
- une paire de glissières intermédiaires 28, entre laquelle et la paire de glissières avant 26 est délimitée une partie intermédiaire-avant 29, pour une mise en place possible des connecteurs de câble 4.

Les connecteurs de câble 4 sont mis en place par la face inférieure du corps isolant 2, soit dans la partie arrière 25 ou la partie intermédiaire-avant 29 pour la connexion indirecte à travers les circuits 7 ou directe sur eux des connecteurs de jarretière reçus dans la partie avant 6 par la face avant. Les circuits de protection série 7 sont mis en place dans la partie intermédiaire 27 par la face avant et sont enfichés sur les connecteurs de câble alors déjà en place dans la partie arrière. Ils peuvent en variante être raccordés aux connecteurs de câble et être ainsi mis en place avec ceux-ci par la face inférieure.

Selon la réalisation illustrée, chaque compartiment reçoit 2 connecteurs de câble 4 sur sa hauteur et peut recevoir 8 circuits de protection série 7, soit 4 circuits de protection par connecteur de câble.

Les parties terminales des cloisons 21 et des deux parois latérales du corps isolant 2, constituant les épaulements latéraux précités définissant les glissières 26, forment des barrettes avant 30 pour les connecteurs de jarretière. Elles se divisent en deux barrettes avant séparées par une goulotte étroite 31 sur chaque cloison, et ne forment qu'une seule barrette avant, sur chaque paroi latérale. Deux barrettes avant sont ainsi associées à chaque compartiment, sur sa hauteur. La partie avant est en outre étagée par des séparations 33 de guidage des connecteurs de jarretière. Ces séparations définissent 8 étages avant sur la hauteur de chaque compartiment, chaque étage avant étant affecté à 2 connecteurs de jarretière 5. Ces dispositions ne sont illustrées totalement que sur la partie avant de l'un des deux compartiments terminaux, pour éviter des surcharges excessives dans ces figures.

Les barrettes 30 présentent chacune 8 fentes 35 ouvertes sur la face avant, dans lesquelles 8 connecteurs de jarretière peuvent être retenus en position d'attente de connexion de chaque côté de chaque compartiment 20, avant la mise en place dans ceux-ci des connecteurs de câble 4. Ces mêmes fentes 35 permettent aussi la mise en position de connexion des connecteurs de jarretière sur les connecteurs de câble ou les circuits de protection série, alors en place convenable dans les compartiments.

Deux fentes 36, moins profondes que les fentes 35, peuvent être prévues de part et d'autre de chacune de ces dernières, pour recevoir les deux fils de la jarretière du connecteur de jarretière concerné. Les jarretières courent par ailleurs sur la face avant du corps isolant, à l'avant ou légèrement à l'intérieur des goulottes 31.

Le corps isolant présente en outre un passe-fils 37, pour les 128 jarretières, qui est saillant sur le bord arrière de sa face supérieure et laissé libre entre le capot arrière 14 et le carter 13. Ce passe-fils définit des canaux 37A, pour les jarretières allant vers les barrettes avant 30.

Il présente également un porte étiquette 38, le long du bord inférieur de sa face avant, pour un repérage des paires raccordées dans chaque compartiment 20.

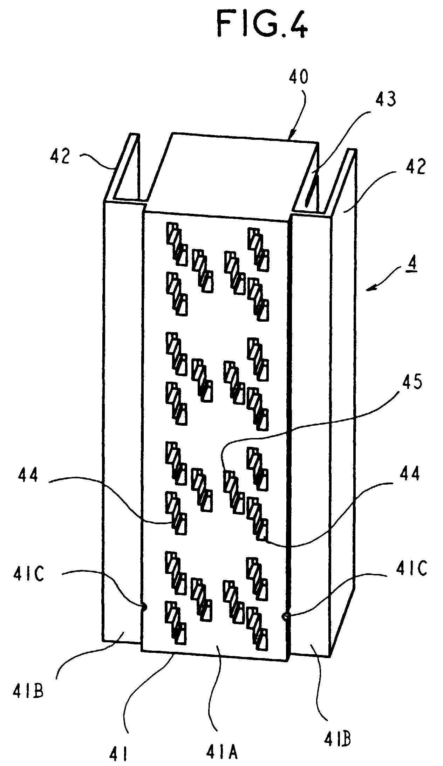

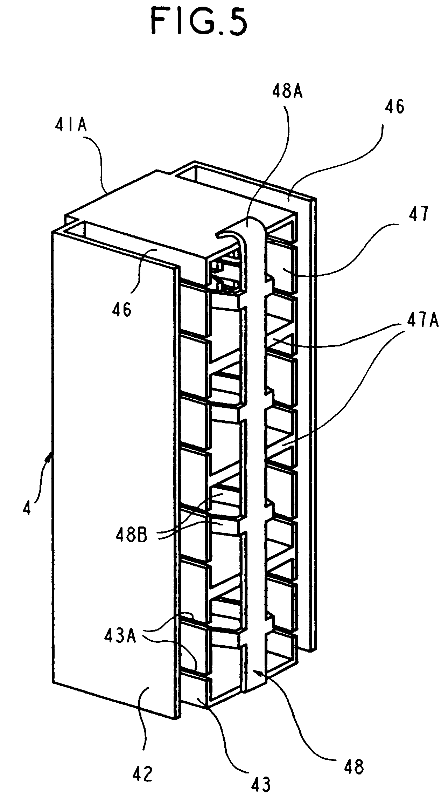

Les connecteurs de câble 4 sont identiques entre eux. Ils sont décrits en regard des figures 4 et 5 qui illustrent l'un d'eux, montré non équipé de ses contacts, ceux-ci étant décrits ultérieurement. Leurs fonctions dans la réglette sont indiquées en se référant aux figures 1 à 3.

Chaque connecteur de câble 4 comporte un bloc isolant 40 dans lequel sont montés et retenus ses contacts, pour les 8 paires concernées et en outre avantageusement pour la distribution de masse à l'intérieur de la réglette depuis la protection extérieure 3.

Le bloc 40 a une forme allongée, de longueur correspondant à la moitié de la hauteur du corps isolant 2 de la réglette et de largeur correspondant à celle de l'un des compartiments 20. Il est de section transversale en U, ouvert sur la face arrière du connecteur, ayant une base 41 et deux branches latérales doubles notées 42 pour celles les plus extérieures et 43 pour celles intérieures.

La base 41 constitue la face avant. Elle présente une partie principale médiane 41A qui est légèrement saillante sur ses parties latérales 41B. Ces dernières correspondent aux branches latérales doubles, sur l'arrière du bloc.

La partie principale médiane 41A de cette base avant est percée de 16 trous 44, agencés en deux rangées longitudinales, chacune de 4 couples de trous 44. Elle est en outre percée de 8 trous supplémentaires 45, chacun associé à l'un des 8 couples de trous 44 et dit centré en regard de l'intervalle entre les 2 trous du couple auquel il est associé. Ces trous 44 et 45 forment ensemble 8 jeux de 3 trous chacun, à raison de 4 jeux par rangée rendue double. Ces jeux sont à pas régulier de chaque côté et sont symétriques d'un côté à l'autre. Ils sont affectés aux contacts individuels identiques du connecteur de câble, en définissant ainsi deux rangées, chacune de 4 couples de points d'enfichage et le point de raccordement de masse associé à chacun d'eux, sur l'extérieur du U. Ces mêmes contacts individuels sont par ailleurs saillants à l'intérieur du U le long de ses branches intérieures, pour le précâblage des 8 paires et la distribution de masse.

Sur l'arrière, les deux branches latérales doubles définissent chacune une goulotte latérale 46 entre chacune de leurs branches extérieure 42 et intérieure 43 et un logement principal arrière 47 entre leurs deux branches intérieures 43.

Les deux goulottes latérales 46 sont ouvertes à leurs deux extrémités. Chacune d'elles reçoit et guide les 4 paires à raccorder aux contacts montés dans les trous 44 attenants. Chacune des branches intérieures 43 est munie de 8 fentes 43A étagées en correspondance avec les trous 44, dans lesquels sont pincés les 8 fils de ces 4 paires.

Le logement principal arrière 47 est fermé à ses extrémités et est cloisonné, au pas entre les jeux de trous, en 4 étages par des séparations arrière 47A. Chacun de ces étages arrière est ainsi affecté à deux couples de contacts pour deux paires et à deux contacts de masse pour les deux points de distribution de masse associés.

Le bloc 40 est en outre équipé d'un peigne arrière de masse 48 à frotteur terminal 48A. Ce frotteur est saillant sur l'une de ses deux faces d'extrémité, qui constitue la face supérieure ou inférieure du connecteur dans la réglette, selon qu'il est monté dans la moitié supérieure ou inférieure de l'un des compartiments 20. Ce montage permet la liaison à pression du frotteur 48A contre le carter 13, à travers l'ajour supérieur correspondant 12 prévu à son effet dans la face supérieure du corps 2, ou contre la paroi inférieure 14B du capot 14.

Ce peigne de masse présente deux rangées de dents 48B assurant à l'intérieur du U défini par le bloc 40 la distribution de masse sur les différents contacts de masse.

Sur ce connecteur, les parties latérales avant 41A forment des butées d'appui à l'arrière des glissières 24 ou 26 tandis qu'en correspondance les bords des branches extérieures 42 constituent des butées d'appui sur l'avant des rebords arrière 23 ou des glissières 28. Le maintien en place du connecteur de câble dans la moitié supérieure ou inférieure de chacun des compartiments est assuré par des moyens de rétention complémentaires, tels qu'une petite encoche 41C sur chacun des deux bords longitudinaux de la partie principle avant 41A (figure 4) et des nervures correspondantes non représentées sur l'arrière des glissières 24 et 26 des compartiments 20.

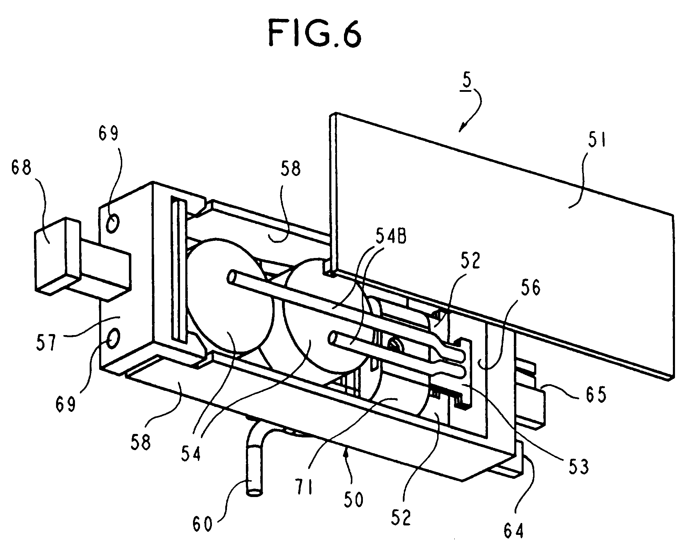

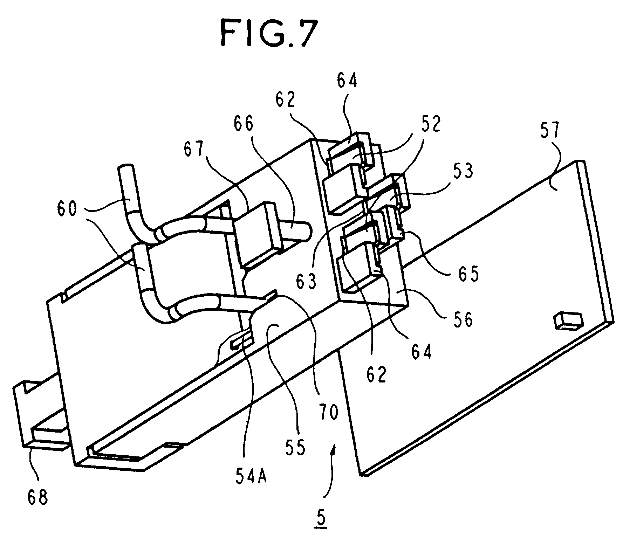

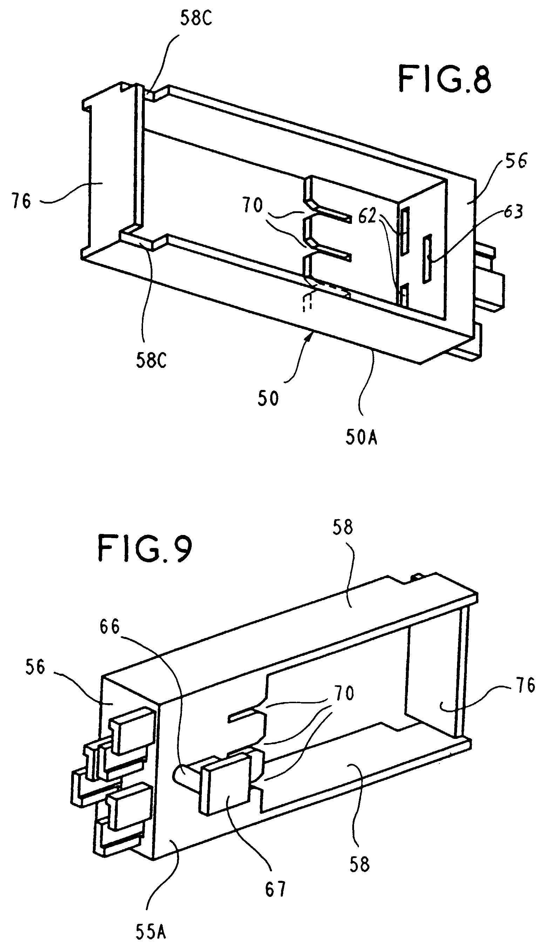

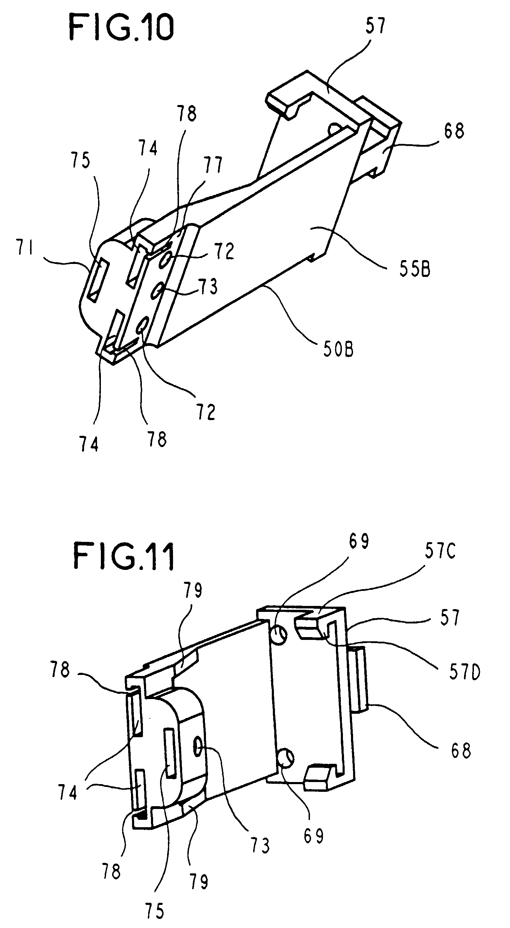

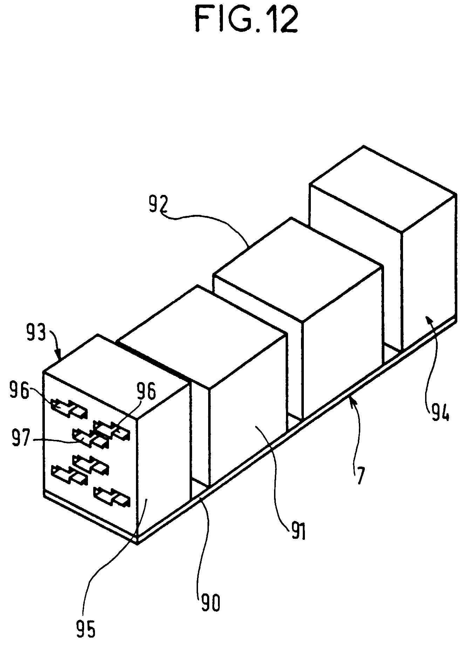

Les connecteurs de jarretière 5 sont tous identiques entre eux. Ils sont décrits tout d'abord en regard de celui illustré dans les figures 6 et 7 et précisés davantage en regard des figures 8 à 11. Les fonctions dans la réglette sont indiquées en se référant aux figures 1 à 4 précédentes.

Chaque connecteur de jarretière 5 se présente sous la forme globale d'un petit boîtier isolant défini par un tiroir 50 fermé par un couvercle 51. Ce tiroir est équipé de deux contacts 52 pour la jarretière concernée, d'un contact de masse 53 associé, notamment pour l'éventuel fil d'écran de la jarretière, et de deux éléments 54 de protection contre des surtensions parasites tels que deux varistances.

Le tiroir présente un fond 55, opposé au couvercle, deux petites parois frontales dites arrière 56 et avant 57, pour les conditions de mise en place de ce connecteur dans le corps isolant 2, et de deux parois latérales 58.

Les deux contacts 52 et le contact de masse 53 sont retenus parallèlement au fond 55 dans la paroi arrière 56 du tiroir, les deux contacts 52 étant côte à côte sur une partie importante de la largeur du tiroir et à proximité du fond et le contact 53 dit centré entre les précédents et du côté du couvercle.

Leurs extrémités à l'intérieur du tiroir sont très largement saillantes dans celui-ci, jusqu'à une dite zone médiane.

Les deux varistances 54 sont reliées à ces extrémités intérieures des contacts. Elles se présentent sous la forme d'un petit cylindre plat et ont sur leurs faces d'extrémité deux queues à souder, telles que 54A du côté du fond et 54B à l'opposé. Les queues 54A des deux varistances sont soudées sur l'une des parties latérales de l'extrémité intérieure de l'un et l'autre des contacts 52, respectivement. Celles 54B sont soudées sur les deux parties latérales de l'extrémité intérieure du contact de masse 53B. Les varistances 54 sont ainsi maintenues en bout des contacts, en étant l'une à l'avant de l'autre et laissant par ailleurs un espace entre elles et les parois latérales du tiroir. Sur ces extrémités intérieures des deux contacts 52 et du contact 53 sont par ailleurs reliés les deux fils 60 et l'éventuel fil d'écran, non représenté, de la jarretière. Les dispositions prévues sur le tiroir pour ce raccordement sont précisées ultérieurement.

Ces contacts 52 et 53 sont légèrement saillants sur l'extérieur de la paroi arrière, de manière complémentaire de l'un des jeux de trous 44 et 45 d'enfichage sur les connecteurs de câble 4. Il leur correspond des passages 62 et 63 à travers la paroi arrière et des cheminées partielles extérieures 64 et 65 sur cette paroi. Ces cheminées assurent la protection de chacun des contacts et sont définies par des pattes sur une partie de la périphérie des bords extérieurs de chacun des passages 62 et 63.

Une patte 66, semi-arrière, est prévue saillante sous le fond parallèlement aux parois latérales du tiroir. Elle se termine par une butée 67 parallèle au fond. Cette patte 66 et la butée 67 permettent la mise en position d'attente de connexion et en position de connexion du connecteur de jarretière, avec sa jarretière câblée sur lui, dans la partie avant du corps isolant. Ces positions sont obtenues par simple engagement de la patte 66 dans l'une des fentes 35 de l'une de barrette avant 30, pour la première position, et poussée supplémentaire à fond de cette patte dans cette fente jusqu'à appui de la butée 67 contre le fond de la goulotte étroite 31, pour la deuxième position.

Une poignée 68, saillante sur l'extérieur de la paroi avant 57 facilite la préhension du connecteur de jarretière, pour ses manipulations.

Deux accès 69 sont prévus latéralement dans la paroi avant 57, pour des prises de test réalisées à l'aide de broches insérées à travers ces accès et venant d'un côté et de l'autre des varistances jusqu'aux deux contacts 52.

Le raccordement des fils, tels que 60 de la jarretière, est expliqué en regard de ces figures 6 et 7 et des figures 8 à 11. Il leur correspond 3 fentes 70 à travers le fond, dans une zone sensiblement médiane de celui-ci, qui sont situées juste à l'avant de la patte saillante extérieurement 66 et centrées sur les axes des extrémités intérieures des deux contacts 52 et du contact 53. Il leur correspond en outre avantageusement une portée 71, saillante sur le fond dans le tiroir, en bout des contacts 52 et 53 et mobile relativement à ceux-ci pour recevoir leurs extrémités intérieures. Cette portée mobile 71 assure d'une part le rôle d'outil poussoir pour le raccordement des fils de la jarretière sur les extrémités intérieures des contacts et le rôle de support supplémentaire de maintien de ces contacts.

Une réalisation préférentielle du tiroir 50 est décrite en regard des figures supplémentaires 8 à 11, comprises en se référant également aux figures 6 et 7.

Le tiroir 50 précité est réalisé en deux parties l'une 50A fixe et l'autre mobile 50B.

A la partie fixe 50A appartiennent la paroi arrière 56, sensiblement le demi-fond attenant 55A, avec les trois fentes 70 débouchant sur son bord opposé à la paroi arrière 56 et la patte 66 et la butée 67 saillantes sous lui, et de préférence les parois latérales 58. Cette partie fixe porte les contacts, avec les varistances qui leur sont soudées. Les parois latérales sont reliées par une entretoise terminale notée 76, opposée à la paroi arrière 56, rigidifiant cette partie fixe 50A.

A la partie mobile 50B appartiennent la paroi avant 57, l'autre demi-fond attenant 55B, avec la portée 71 saillante sur lui et terminale à l'opposé de la paroi avant. On voit en outre que cette portée 71 est percée depuis le fond de deux trous 72 non traversants et d'un trou 73 ici traversant, qui sont transversaux aux contacts de la partie fixe et en regard de leurs axes respectifs. Elle est en outre percée parallèlement au fond de deux passages 74, latéraux et proches du fond, et d'un passage 75 centré entre les précédents et à l'opposé par rapport au fond. Les trous 72 et 73 reçoivent les fils de la jarretière. Les passages 74 et 75 reçoivent les extrémités intérieures des contacts, quand la partie mobile 50B est actionnée sur la partie fixe 50A, vers la paroi arrière de cette dernière.

Cette portée 71 définit en outre une échancrure 77 dans le fond 55B, ainsi rendu en retrait sous la portée. Elle présente aussi deux rainures 78, réalisées dans l'échancrure sur l'extérieur des deux trous 72 et en regard des parties latérales extérieures des deux passages 74, en les ouvrant en correspondance partiellement sous la portée. L'échancrure 77 constitue une surface de guidage et d'encastrement des bords terminaux des deux demi-fonds 55A et 55B au niveau de leur jonction. Les rainures 78 reçoivent quant à elles les queues de liaison 54A, déjà raccordées aux contacts 52, s'y encastrant quand les extrémités intérieures des contacts se logent dans les passages prévus à leur effet dans la portée.

Cette portée 71 est moins large que le tiroir. Elle forme de part et d'autre deux rampes latérales 79, peu saillantes sur le fond et situées en regard des deux accès 69 de la paroi avant.

L'assemblage des deux parties 50A et 50B et le câblage de la jarretière se font par engagement de la portée 71 à l'avant des fentes 70 et de la paroi avant 57 à l'avant de l'entretoise 76, puis insertion des fils 60 et de l'éventuel écran de la jarretière dans les trous 72 et 73, et alors par poussée de la partie mobile 50B sur la partie fixe 50A, c'est-à-dire de la portée 71 sur les fentes 70 et de la paroi avant 57 quasiment contre l'entretoise 76. Deux échancrures terminales 58C sur les parois latérales, de part et d'autre de l'entretoise 76, et deux pattes correspondantes 57C saillantes sur l'intérieur de la paroi avant 57 contribuent au guidage d'assemblage.

La retenue de la partie mobile sur celle fixe est assurée par le pinçage des fils de la jarretière dans les fentes 70, avec leur raccordement aux contacts, et en outre par des doigts d'encliquetage tels que ceux 57D prévus en regard l'un de l'autre en bout des pattes 57C et retenus bloqués sur l'arrière de l'entretoise 76.

Les circuits 7 de protection série sont identiques d'un type à l'autre, selon qu'ils assurent une protection électromagnétique interne supplémentaire ou une protection contre des surtensions dues à la foudre. Ils sont décrits en regard de la figure 12 illustrant l'un d'eux, indépendamment du type de protection assurée.

Ce circuit 7 comporte une carte de circuits imprimés 90 sur laquelle sont montés deux ensembles, formés de composants de filtrage ou par deux surtenseurs et schématisés globalement en 91 et 92, pour les 2 paires concernées, et deux connecteurs terminaux 93 et 94 montés solidaires de la carte, sur les deux parties terminales de cette carte 90, et raccordés aux deux ensembles 91 et 92. Ces connecteurs sont dits arrière et avant, pour les conditions de montage du circuit 7 dans le corps isolant de la réglette des figures 1 et 2.

Le connecteur 93 comporte un bloc isolant 95 dans lequel sont retenus deux jeux identiques de 3 contacts, tels que les 2 contacts 96 et le contact 97, ce dernier étant un contact de masse. Le connecteur 94 est semblable. Les deux jeux de contacts de chacun de ces connecteurs sont accessibles sur la face frontale du connecteur concerné, selon un agencement complémentaire ou identique selon le connecteur terminal de deux jeux en regard l'un de l'autre sur la face avant des connecteurs de câble 4. Ces dispositions, qui correspondent à celles prévues sur la face arrière de deux connecteurs de jarretière, accolés fond contre fond, et sur une partie de la face avant de chaque connecteur de câble, ne sont donc plus décrites en détail.

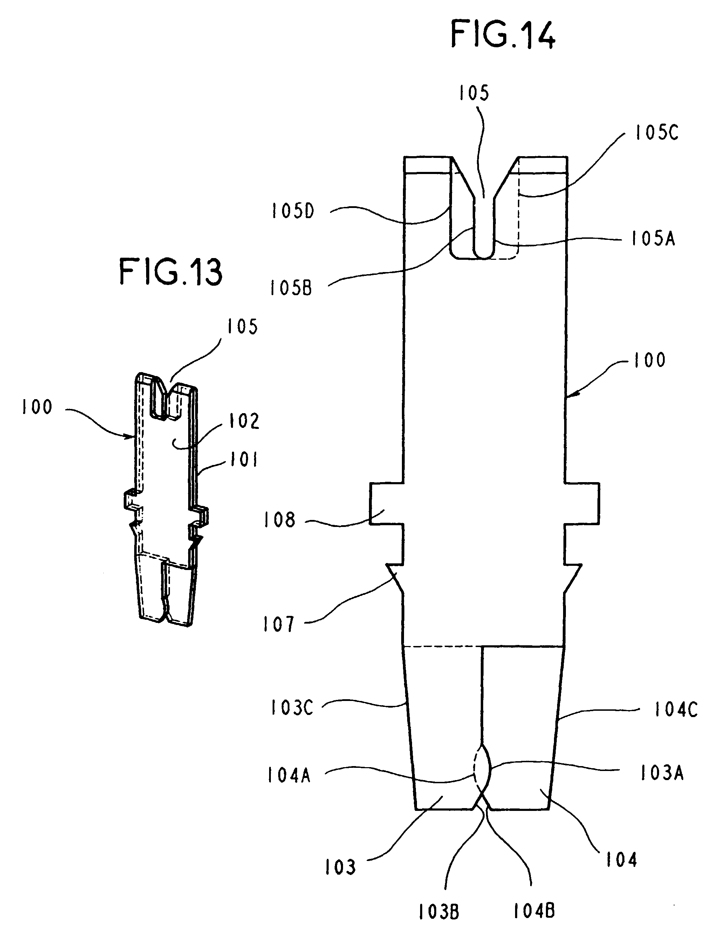

Les contacts des différents connecteurs précités sont tous identiques. L'un d'eux est décrit en regard des figures 13 et 14, dans lesquelles il est désigné sous la référence générale 100, indépendamment de son utilisation possible dans l'un des connecteurs de jarretière dont les contacts ont déjà été identifiés ci-avant.

Ce contact est plat de forme rectangulaire et a l'une de ses extrémités de type hermaphrodite pour sa connexion à un autre contact identique. Il présente deux branches 101 et 102 accolées l'une à l'autre et est dit de ce fait contact double. Il est constitué par une lame plate, de longueur double de celle du contact, qui est découpée convenablement et pliée en deux sur elle-même.

Son extrémité de type hermaphrodite est constituée par deux bras élastiques 103 et 104, chacun défini par la partie terminale échancrée d'un côté de chacune des branches 101 et 102. Ces bras ont une largeur sensiblement moitié de celle des branches ou du contact. Ils s'étendent globalement l'un d'un côté de l'axe longitudinal du contact et l'autre de l'autre côté, en ayant leur bord dit interne correspondant à cet axe et en étant ainsi côte à côte sur la largeur du contact, mais avec un décalage l'un par rapport à l'autre donné par l'épaisseur de l'une des branches. Leur bord interne présente un bossage 103A, 104A, selon le bras, quasi-terminal et légèrement saillant sur l'axe longitudinal du contact, et un chanfrein terminal 103B, 104B, défini par le prolongement du flanc du bossage jusqu'à l'extrémité du bras, ainsi rendue en retrait sur cet axe. Leur bord opposé noté 103C, 104C est légèrement chanfreiné sur sa longueur.

Bien entendu des dispositions différentes peuvent être prévues sur cette extrémité de type hermaphrodite. Ce sont par exemple, sur le contact double, un bossage sur le bord interne de l'un de ses deux bras élastiques et une échancrure complémentaires sur celui de l'autre bras élastique, ou en variante sur un contact dit simple, ayant une seule branche et donc un seul bras élastique, un bossage et éventuellement une échancrure peu profonde ou plate à la suite du bossage, sur le bord interne de ce bras élastique unique.

On précise que l'élasticité de chaque bras dit élastique du contact est permise uniquement dans le plan du bras et obtenue, lors du montage du contact dans l'un des connecteurs, du fait du chanfrein sur le bord externe de ce bras.

Le contact 100 comporte une fente autodénudante 105, sur son autre extrémité opposée. Cette fente est à ouverture en Vé et est centrée sur l'axe longitudinal du contact. Elle est définie avec son ouverture par une découpe dans la lame avant pliage. Elle est délimitée, avec son ouverture, après pliage de la lame, par deux bords opposés 105A et 105B, qui sont d'un côté et de l'autre de l'axe et appartiennent l'un à la partie de la découpe s'étendant dans l'une des branches et l'autre à la partie de la découpe s'étendant dans l'autre branche. Les deux autres bords de ces deux parties de la découpe dans les deux branches sont notés 105C et 105D. Ils sont en retrait sur les bords 105A et 105B.

Sur ce contact 100, deux dents latérales 107 et deux butées latérales 108, plus largement saillantes sur les dents, sont en outre prévues à la suite sur les bords longitudinaux du contact, pour sa retenue et son blocage dans le connecteur qui le reçoit. Les dents sont relativement proches des bras élastiques et les butées à faible distance des dents.

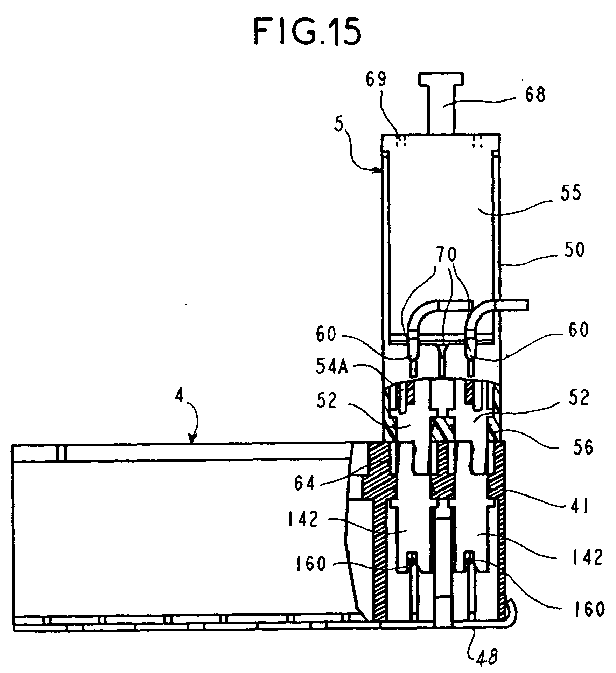

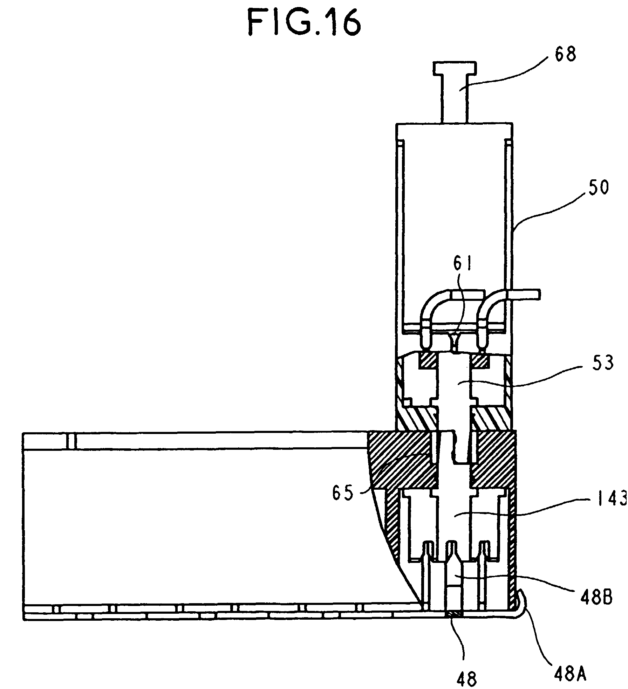

Le maintien des contacts dans les connecteurs de jarretière et de câble, le raccordement d'une paire à une jarretière et la distribution de masse sont explicités en regard des figures 15 et 16, illustrant ce raccordement et cette distribution de masse, respectivement, pour les deux niveaux de coupe partielle réalisés.

Dans ces figures, ces contacts sont identiques et du type du contact 100 précité. On a désigné par 160 les deux fils de ligne du câble qui correspondent aux deux fils 60 précités de la jarretière, par 142 les deux contacts du connecteur de câble 4 qui correspondent et sont connectés aux deux contacts 52 précités du connecteur de jarretière (figure 15) et par 143 le contact de masse du premier de ces connecteurs qui correspond et est connecté au contact 53 précité du deuxième (figure 16). On n'a par contre pas référencé les bras élastiques terminaux de connexion hermaphrodite des contacts, le bossage quasi terminal sur le bord interne de chaque bras, leur fente autodénudante opposée, les deux dents latérales de retenue et les deux butées latérales qui sont identiques à ceux du contact 100 décrit ci-avant.

On voit dans l'une ou l'autre de ces 2 figures que les contacts 142 et 143 sont maintenus par leurs dents de retenue reçues dans des empreintes correspondantes prévues dans les logements individuels traversant la base 41 du bloc en U 40 du connecteur de câble 4, alors que leurs butées sont en appui sur la face interne de cette base 41. Il en est de même pour les contacts 52 et 53 maintenus dans la paroi arrière 56 du tiroir 50 fermé du connecteur de jarretière 5 avec leurs butées en appui sur la face intérieure de cette paroi. On y voit également les deux fils 60 de jarretière raccordés dans les fentes autodénudantes des deux contacts 52, l'éventuel fil d'écran noté 61 de la jarretière raccordé dans la fente autodénudante du contact 53 et les deux fils 160 de l'une des paires du câble raccordés dans les fentes autodénudantes des deux contacts 142. Ces différents fils sont précâblés dans les connecteurs de jarretière et de câble correspondants, avant leur mise en place dans le corps isolant de la réglette et leur enfichage résultant.

On voit également dans la figure 16 le peigne de masse 48 dont l'une des dents 48B est en pression sur le contact de masse 143 considéré, dans le connecteur de câble 4 et dans la figure 15 la queue 54A de l'une des varistances reliée à l'un des deux contacts 52 du connecteur de jarretière 5.

L'engagement à fond du connecteur de jarretière dans le connecteur de câble conduit à l'engagement à fond des cheminées 64 et 65 du premier dans les trous d'enfichage du deuxième, pour lequel les bras élastiques de connexion hermaphrodite des contacts en vis-à-vis sont raccordés. Les deux fils 160 et les deux fils 60 sont raccordés et la masse rapportée par le peigne 48 et le contact 143 sur le contact 53, même en l'absence de fil d'écran de la jarretière raccordé à ce contact 53. La paire raccordée se trouve ainsi protégée contre les surtensions parasites écoulées à la masse par les varistances et les contacts 53 et 143 jusqu'au carter.

Ces connecteurs de câble et de jarretière assurent une distribution uniforme de masse depuis le carter, pour toutes les paires raccordées.

A partir de ces mêmes figures 15 et 16, on comprend que l'interposition des circuits de protection série 7 précités entre chaque connecteur de câble et les connecteurs de jarretière permet le raccordement des paires concernées à travers ces protections individuelles, avec l'écoulement à la masse des possibles perturbations véhiculées sur chaque paire raccordée.

La réglette précâblée selon l'invention peut bien entendu résulter d'un autre agencement de ses connecteurs de câble et de ses éventuels circuits de protection série dans le corps isolant et d'un nombre différent de paires câblées sur chaque connecteur de câble ou protégées individuellement par chaque circuit de protection, ceci sans sortir du cadre de l'invention.

On indique aussi que les compartiments du corps isolant peuvent être horizontaux et non verticaux, avec alors les entrées pour les connecteurs de câble sur une face latérale et non pas sur celle inférieure du corps isolant.

## Revendications

1. Réglette précâblée de raccordement, comportant un corps isolant (2) à l'intérieur duquel sont réalisés les raccordements des paires d'au moins un câble à des jarretières, par couplage de couples de premiers contacts (142) auxquels sont reliées les paires et de couples de deuxièmes contacts (52) auxquels sont reliées les jarretières, et pouvant comporter des circuits de protection (7) des paires reliées aux jarretières, caractérisée en ce qu'elle comporte:
- des connecteurs de câble (4), chacun comportant n desdits couples de premiers contacts (142), montés dans un bloc isolant (40) et accessibles selon n couples identiques de points d'enfichage (44) sur ledit bloc, et recevant n desdites paires précâblées sensiblement à l'opposé desdits points d'enfichage,
- des connecteurs de jarretière (5), chacun comportant l'un desdits couples de deuxièmes contacts (52), monté dans un boîtier isolant (50, 51) et accessible complémentairement à l'un desdits couples de points d'enfichage, et recevant l'une desdites jarretières précâblée dans le boîtier sur ce couple de deuxièmes contacts,
- ledit corps isolant (2), formé d'un coffret parallélépipédique de rangement desdits connecteurs de jarretière (5) dans une partie avant (6) dudit coffret, ouverte sur une première face correspondante, dite avant, et desdits connecteurs de câble (4) sélectivement dans l'une des parties dites intermédiaire (27) et arrière (25) dudit coffret, communiquantes l'une avec l'autre et avec ladite partie avant, pour l'enfichage direct ou indirect des connecteurs de jarretière sur les connecteurs de câble,
- les possibles circuits de protection série (7), chacun réalisé sur une carte (90), en étant ainsi affecté à la protection série d'au moins l'une des paires, et chacun équipé de deux connecteurs terminaux (93, 94), opposés sur la carte et comportant autant de couples de troisièmes, respectivement quatrièmes, contacts, que de paires à protéger, reliés aux circuits de la carte et accessibles frontalement, en étant l'un complémentaire de l'autre et du même nombre desdits couples de points d'enfichage, lesdits circuits de protection série (7) étant susceptibles d'être montés dans ladite partie intermédiaire, pour leur enfichage sur les connecteurs de câble (4) alors déjà en place dans ladite partie arrière et pour l'enfichage sur eux des connecteurs de jarretière reçus dans ladite partie avant.

2. Réglette selon la revendication 1, caractérisée en ce que ledit corps isolant (2) est cloisonné, depuis ladite face avant ouverte jusqu'à une deuxième face opposée arrière, en compartiments identiques (20), séparés par des cloisons (21), divisés selon lesdites parties avant, intermédiaire et arrière, qu'ils définissent ensemble, et ouverts en outre en regard desdites parties intermédiaire et arrière sur une troisième face du corps isolant.

3. Réglette selon la revendication 2, caractérisée en ce que des jeux de glissières (24, 26, 28), saillantes dans chacun desdits compartiments, délimitent lesdites parties avant, intermédiaire et arrière, entre lesdites faces avant et arrière dudit corps isolant.

4. Réglette selon la revendication 3, caractérisée en ce que l'un des jeux de glissières dites intermédiaires (28), divise ladite partie intermédiaire, pour le montage souhaité dans celle-ci des connecteurs de câble ou desdits premiers circuits de protection série et les enfichages correspondants réalisés.

5. Réglette selon l'une des revendications 2 à 4, caractérisée en ce que lesdits compartiments (20) définissent le pas desdits connecteurs de câble (4), entre des quatrièmes faces opposées et parallèles aux cloisons (21) dudit corps isolant.

6. Réglette selon l'une des revendications 2 à 5, comportant en outre une protection électromagnétique extérieure, caractérisée en ce que ladite protection électromagnétique extérieure (3) entoure totalement ledit corps isolant, à l'exception de ladite face avant-de celui-ci, est équipée d'une entrée arrière de câble (14E), et est montée ouvrante au moins en regard de ladite troisième face dudit corps isolant (2).

7. Réglette selon la revendication 6, caractérisée en ce que ladite protection électromagnétique extérieure (3) comporte un carter (13) et un capot arrière ouvrant (14), le capot prolongeant le carter et recouvrant ladite troisième face quand il est fermé, en étant mis en contact avec ledit carter.

8. Réglette selon l'une des revendications 6 et 7, caractérisée en ce qu'un contact supplémentaire dit de masse (143, 53) est associé à chacun desdits couples de contacts des connecteurs de câble (4), des connecteurs de jarretière (5) et des connecteurs terminaux des circuits de protection série (7) et est accessible avec le couple de contacts sur le connecteur correspondant, en formant un jeu complémentaire de l'un des connecteurs à l'un des autres s'y enfichant.

9. Réglette selon la revendication 8, caractérisée en ce que chaque connecteur de câble (4) comporte en outre un peigne de masse (48), retenu sur ledit bloc isolant (40), à l'opposé desdits points d'enfichage et raccordé d'une part aux contacts de masse (143) associés aux couples individuels de premiers contacts (142) et d'autre part à ladite protection électromagnétique extérieure (3).

10. Réglette selon la revendication 9, caractérisée en ce que ledit peigne de masse (48) comporte au moins un frotteur élastique (48A) terminal sur ledit bloc, de raccordement à ladite protection électromagnétique extérieure (3) à travers le corps isolant.

11. Réglette selon l'une des revendications 8 à 10, caractérisée en ce que chaque connecteur de jarretière (5) comporte en outre deux varistances (54) montées dans ledit boîtier (50, 51) et chacun reliée entre l'un des contacts du couple de deuxièmes contacts (52) et le contact de masse (53) associé.

12. Réglette selon l'une des revendications 5 à 11, caractérisée en ce qu'elle comporte des barrettes avant (30), à raison d'au moins l'une desdites barrettes par compartiment (20), affectées au montage desdits connecteurs de jarretière (5) dans au moins une position dite d'attente de connexion, dans la partie avant dudit corps isolant.

13. Réglette selon la revendication 12, caractérisée en ce que chaque barrette avant (30) comporte une série de fentes (35), ouvertes sur ladite face avant du corps isolant et réalisées au pas des connecteurs de jarretières entre ladite troisième face et celle opposée dudit corps isolant, et en ce que chaque connecteur de jarretière (5) comporte en outre une patte (66) saillante sur ledit boîtier (50, 51) reçue dans l'une desdites fentes (35), pour son maintien.

14. Réglette selon la revendication 13, caractérisée en ce que ladite patte (66) se termine par une butée (67), définissant la fin de course de ladite patte dans l'une desdites fentes (35), pour une position dite de connexion du connecteur de jarretière dans ladite partie avant du corps isolant (2).

15. Réglette selon l'une des revendications 12 à 14, caractérisée en ce que chaque connecteur de câble (5) est à deux rangées identiques de n couples de points d'enfichage, pour un nombre n choisi pair, en ce que deux desdites barrettes avant (30) sont associées à chaque compartiment et affectées aux connecteurs de jarretière disposés accolés deux à deux entre deux barrettes dans la partie avant de ce compartiment.

16. Réglette selon la revendication 15, caractérisée en ce que le bloc isolant (40) de chaque connecteur de câble (4) est en U ayant une base rectangulaire (41), dans laquelle les n couples de premiers contacts sont en deux rangées sur sa longueur en étant d'une part saillants à l'intérieur du U et d'autre part accessibles sur l'extérieur du U, et deux branches latérales, chacune double et formée d'une branche extérieure (42) et d'une branche-intérieure (43) séparées par une goulotte (46) recevant n/2 des n paires, de chaque côté du U, lesdites n/2 paires étant retenues de manière étagée sur la branche intérieure en correspondance avec les n/2 couples de contacts du même côté, auxquels elles sont raccordées à l'intérieur du U.

17. Réglette selon l'une des revendications 15 et 16, caractérisée en ce que le boîtier isolant (50, 51) de chaque connecteur de jarretière (5) est constitué par un tiroir (50), équipé et fermé par un couvercle (51), ayant une paroi frontale dite arrière (56) traversée par les contacts (52, 53) de ce connecteur de jarretière, en étant saillants à l'intérieur du tiroir et accessibles sur l'extérieur de ladite paroi frontale arrière, et un fond (55) à travers lequel est reçue et raccordée la jarretière aux extrémités intérieures des contacts dans le tiroir.

18. Réglette selon la revendication 17, caractérisée en ce que ledit tiroir (50) est lui-même en deux parties assemblables, l'une dite fixe (50A), à laquelle appartiennent au moins ladite paroi frontale arrière (56) et une première portion du fond dite demi-fond arrière (55A), et l'autre dite mobile (50B) à laquelle appartient au moins une deuxième portion dudit fond dite demi-fond avant (55B), lesdits demi-fonds arrière et avant se recouvrant l'un l'autre partiellement dans une zone dite médiane de jonction et présentant en correspondance des trous (72, 73) dans le demi-fond avant (55B) d'insertion des fils de la jarretière et des fentes dans le demi-fond arrière (55A), venant se superposer dans ladite zone de jonction en assurant le raccordement des fils de la jarretière sur lesdites extrémités intérieures des contacts dans ledit tiroir.

19. Réglette selon l'une des revendications 1 à 18, caractérisée en ce que chacun desdits circuits de protection série (7) comporte au moins un ensemble (91, 92) formé de composants de filtrage électromagnétique ou d'un surtenseur, monté sur ladite carte (90) et relié auxdits connecteurs terminaux (93, 94).

20. Réglette selon l'une des revendications 1 à 19, caractérisée en ce que les différents contacts des connecteurs de câble (4), des connecteurs de jarretière (5) et des connecteurs terminaux des circuits de protection série (7) sont tous identiques entre eux, chacun (100) des contacts étant plat et présentant une extrémité de couplage hermaphrodite (103, 104), qui est accessible sur le connecteur correspondant, et une extrémité opposée à fourche autodénudante (105).

## Patentansprüche

1. Vorverdrahtete Anschlußleiste mit einem Isolierkörper (2), in dem die Anschlüsse der Paare mindestens eines Kabels an Verteildrähte durch Kopplung von zwei ersten Kontakten (142), an die die Leiterpaare angeschlossen sind, mit zwei zweiten Kontakten (52) realisiert werden, an die die Verteildrähte angeschlossen sind, wobei die Leiste Schutzschaltungen (7) für die Leiterpaare enthalten können, die an die Verteildrähte angeschlossen sind, dadurch gekennzeichnet, daß sie aufweist:
- Kabelverbinder (4), die je n Paare von ersten Kontakten (142) aufweisen, die in einem isolierenden Block (40) montiert sind und gemäß n identischen Paaren von Steckpunkten (44) auf dem Block zugänglich sind sowie n vorverdrahtete Leiterpaare im wesentlichen entgegengesetzt zu den Steckpunkten aufnehmen,
- Verteildrahtverbinder (5), die je eines der Paare von zweiten Kontakten (52) enthalten, in einem isolierenden Gehäuse (50, 51) montiert sind, komplementär zu einem der Paare von Steckpunkten zugänglich sind sowie einen der vorverdrahteten Verteildrähte in dem Gehäuse auf diesem Paar von zweiten Kontakten empfangen,
- den Isolierkörper (2), der aus einem parallelepipedischen Gehäuse zur Aufnahme der Verteildrahtverbinder (5) in einem vorderen Bereich (6) des Gehäuses, das an einer entsprechenden ersten Seite, der Vorderseite, offen ist, sowie der Kabelverbinder (4) selektiv in einem Zwischenbereich (27) oder einem hinteren Bereich (25) des Gehäuses, wobei diese Bereiche miteinander sowie mit dem vorderen Bereich in Verbindung stehen, damit die Verteildrahtverbinder direkt oder indirekt in die Kabelverbinder eingesteckt werden können,
- die möglichen Serienschutzschaltungen (7), die je auf einer Karte (90) realisiert sind und dem Serienschutz mindestens eines der Paare zugeordnet sind, wobei jede dieser Schaltungen zwei Endverbinder (93, 94) an entgegengesetzten Enden der Karte besitzt, die ebensoviele Paare von dritten bzw. vierten Kontakten besitzen, wie es zu schützende Paare gibt, und wobei diese Kontakte an die Schaltungen der Karte angeschlossen sind und frontal zugänglich sind, wobei sie zueinander komplementär sind und die gleiche Anzahl von Paaren von Steckpunkten besitzen, wobei die Serienschutzschaltungen (7) im mittleren Bereich montiert werden können und in die bereits im hinteren Bereich vorliegenden Kabelverbinder (4) eingesteckt werden, worauf in sie Verteildrahtverbinder eingesteckt werden, die in den vorderen Bereich eingesetzt werden.

2. Leiste nach Anspruch 1, dadurch gekennzeichnet, daß der Isolierkörper (2) von der offenen Vorderseite bis zu einer zweiten, entgegengesetzten hinteren Seite in identische Abteile (20) durch Zwischenwände (21) unterteilt ist, daß diese Abteile in vordere, mittlere und hintere Bereiche unterteilt sind, die sie gemeinsam definieren, und daß diese Abteile weiter in Höhe der mittleren und hinteren Bereiche auf einer dritten Seite des Isolierkörpers offen sind.

3. Leiste nach Anspruch 2, dadurch gekennzeichnet, daß in jedes der Abteile vorspringende Schienensätze (24, 26, 28) den vorderen, mittleren und hinteren Bereich zwischen der Vorderseite und der Rückseite des Isolierkörpers begrenzen.

4. Leiste nach Anspruch 3, dadurch gekennzeichnet, daß der mittlere Schienensatz (28) den mittleren Bereich für die gewünschte Montage der Kabelverbinder in diesem Bereich oder der ersten Serienschutzschaltungen und der entsprechenden hergestellten Steckverbindungen unterteilt.

5. Leiste nach einem der Ansprüche 2 bis 4, dadurch gekennzeichnet, daß die Abteile (20) den Abstand der Kabelverbinder (4) zwischen vierten Seiten definieren, die den Zwischenwänden (21) des Isolierkörpers gegenüberliegen und dazu parallel verlaufen.

6. Leiste nach einem der Ansprüche 2 bis 5, die außerdem einen äußeren elektromagnetischen Schutz aufweist, dadurch gekennzeichnet, daß der äußere elektromagnetische Schutz (3) den Isolierkörper mit Ausnahme von dessen Vorderseite ganz umgibt, einen rückwärtigen Kabeleingang (14E) besitzt und zumindest gegenüber der dritten Seite des Isolierkörpers (2) so montiert ist, daß er geöffnet werden kann.

7. Leiste nach Anspruch 6, dadurch gekennzeichnet, daß der äußere elektromagnetische Schutz (3) einen Kasten (13) und eine zu öffnende rückseitige Haube (14) besitzt, wobei letztere den Kasten verlängert und die dritte Seite bedeckt und mit dem Kasten in Kontakt steht, wenn sie verschlossen ist.

8. Leiste nach einem der Ansprüche 6 und 7, dadurch gekennzeichnet, daß ein zusätzlicher Massekontakt (143, 53) jedem der Kontaktpaare der Kabelverbinder (4), der Verteildrahtverbinder (5) und der Endverbinder der Serienschutzschaltungen (7) zugeordnet ist und mit den beiden Kontakten am entsprechenden Verbinder zugänglich ist, indem er einen komplementären Satz in einem der Verbinder bezüglich eines anderen in ihn steckbaren Verbinders bildet.

9. Leiste nach Anspruch 8, dadurch gekennzeichnet, daß jeder Kabelverbinder (4) außerdem einen Massekamm (48) enthält, der auf dem isolierenden Block (40) entfernt von den Steckpunkten gehalten und einerseits an die den einzelnen Paaren von ersten Kontakten (142) zugeordneten Massekontakte (143) und andererseits an den äußeren elektromagnetischen Schutz (3) angeschlossen ist.

10. Leiste nach Anspruch 9, dadurch gekennzeichnet, daß der Massekamm (48) mindestens einen elastischen Reibkontakt (48A) am Ende des Blocks zum Anschluß an den äußeren magnetischen Schutz (3) durch den Isolierkörper aufweist.

11. Leiste nach einem der Ansprüche 8 bis 10, dadurch gekennzeichnet, daß jeder Verteildrahtverbinder (5) außerdem zwei Varistoren (54) aufweist, die in dem Gehäuse (50, 51) montiert sind und je zwischen einen der Kontakte des Paars von zweiten Kontakten (52) und den zugeordneten Massekontakt (53) eingefügt sind.

12. Leiste nach einem der Ansprüche 5 bis 11, dadurch gekennzeichnet, daß sie vordere Anschlußleisten (30) aufweist, und zwar mindestens eine je Abteil (20), die der Montage der Verteildrahtverbinder (5) in mindestens einer sogenannten Anschluß-Wartestellung im vorderen Bereich des Isolierkörpers zugewiesen sind.

13. Leiste nach Anspruch 12, dadurch gekennzeichnet, daß jede vordere Anschlußleiste (30) eine Serie von zur Vorderseite des Isolierkörpers offenen Schlitzen (35) aufweist, die im gleichen Abstand wie die Verteildrahtverbinder zwischen der dritten Seite und der dieser gegenüberliegenden Seite des Isolierkörpers ausgebildet sind, und daß jeder Verteildrahtverbinder (5) außerdem eine über das Gehäuse (50, 51) vorstehende Lasche (66) aufweist, die in einen der Schlitze (35) für seinen Halt eindringt.

14. Leiste nach Anspruch 13, dadurch gekennzeichnet, daß jede Lasche (66) in einem Anschlag (67) endet, der das Ende des Eindringwegs der Lasche in diesen Schlitz (35) für eine Stellung definiert, die Anschlußstellung des Verteildrahtverbinders in diesem vorderen Bereich des Isolierkörpers (2) genannt wird.

15. Leiste nach einem der Ansprüche 12 bis 14, dadurch gekennzeichnet, daß jeder Kabelverbinder (5) zwei identische Reihen von n Paaren von Steckpunkten besitzt, wobei n geradzahlig ist, und daß zwei vordere Anschlußleisten (30) jedem Abteil zugeordnet sind und den Verteildrahtverbindern zugewiesen sind, die paarweise zwischen zwei Anschlußleisten im vorderen Bereich dieses Abteils nebeneinanderliegen.

16. Leiste nach Anspruch 15, dadurch gekennzeichnet, daß der isolierende Block (40) jedes Kabelverbinders (4) U-förmig ist und eine rechtwinklige Basis (41) besitzt, in der die n Paare von ersten Kontakten in zwei Reihen über die Länge angeordnet sind sowie einerseits nach der Innenseite des U vorstehen und andererseits an der Außenseite des U zugänglich sind, während zwei seitliche Zweige je doppelt aus einem äußeren Zweig (42) und einem inneren Zweig (43) gebildet werden, die durch eine auf jeder Seite des U n/2 der n Paare aufnehmenden Rinne (46) getrennt sind, wobei die n/2 Paare gestuft auf dem inneren Zweig gegenüber den n/2 Paaren von Kontakten der gleichen Seite gehalten werden, an die sie innerhalb des U angeschlossen sind.

17. Leiste nach einem der Ansprüche 15 und 16, dadurch gekennzeichnet, daß das isolierende Gehäuse (50, 51) jedes Verteildrahtverbinders (5) aus einem mit einem Deckel (51) verschlossenen Einschub (50) besteht, mit einer hinteren Stirnwand (56), die von den Kontakten (52, 53) dieses Verteildrahtverbinders durchquert wird, wobei die Kontakte nach der Innenseite des Einschubs vorstehen und von außerhalb der hinteren Stirnwand zugänglich sind, und mit einem Boden (55), durch den der Verteildraht an die inneren Enden der Kontakte in dem Einschub angeschlossen wird.

18. Leiste nach Anspruch 17, dadurch gekennzeichnet, daß der Einschub (50) seinerseits aus zwei zusammensteckbaren Teilen besteht, nämlich einem ortsfesten Teil (50A), zu dem mindestens eine hintere Stirnwand (56) und ein erster Abschnitt (55A) des Bodens, hinterer Halbboden genannt, gehört, und einem beweglichen Teil (50B), zu dem mindestens ein zweiter Abschnitt (55B) des Bodens, vorderer Halbboden genannt, gehört, wobei die beiden Halbböden einander teilweise in einer mittleren Verbindungszone überdecken und zueinander fluchtende Löcher (72, 73) im vorderen Halbboden (55B) zum Hineinstecken der Verteildrähte sowie Schlitze im hinteren Halbboden (55A) aufweisen, die sich in der Überdeckungszone übereinanderlegen und den Anschluß der Verteildrähte an die inneren Enden der Kontakte in dem Einschub gewährleisten.

19. Leiste nach einem der Ansprüche 1 bis 18, dadurch gekennzeichnet, daß jede der Serienschutzschaltungen (7) mindestens eine Einheit (91, 92) aufweist, die von elektromagnetischen Filterbauteilen oder einem Überspannungsableiter gebildet wird und die auf der Karte (90) montiert und an die Endverbinder (93, 94) angeschlossen ist.

20. Leiste nach einem der Ansprüche 1 bis 19, dadurch gekennzeichnet, daß die verschiedenen Kontakte der Kabelverbinder (4), der Verteildrahtverbinder (5) und der Endverbinder der Serienschutzschaltungen (7) alle einander gleichen, wobei jeder (100) der Kontakte ein Flachkontakt ist und ein hermaphroditisches Koppelende (103, 104), das am entsprechenden Verbinder zugänglich ist, sowie ein dazu entgegengesetztes Ende mit einer die Isolierung durchschneidenden Gabel (105) besitzt.

## Claims

1. A pre-wired connection strip including an insulating body (2) inside which pairs of wires from at least one cable are connected to jumpers by pairs of first contacts (142), to which the pairs of wires are connected, being coupled to pairs of second contacts (52), to which the jumpers are connected, the strip optionally including protection circuits (7) for protecting the pairs of wires connected to the jumpers, said strip being characterized in that it comprises:
cable connectors (4), each of which includes n of said pairs of first contacts (142) mounted in an insulating block (40) and accessible via n identical pairs of pluggable points (44) on said block, and receiving n of said pairs of wires pre-wired substantially opposite from said pluggable points;
jumper connectors (5), each of which includes one of said pairs of second contacts (52) mounted in an insulating box (50, 51) and accessible such as to be complementary to one of said pairs of pluggable points, and receiving one of said jumpers pre-wired inside the box to the pair of second contacts;
said insulating body (2) formed by a rectangular case for organizing firstly said jumper connectors (5) in a front portion (6) of said case, which front portion is open over a corresponding "front" first face, and secondly said cable connectors (4) selectively either in the "intermediate" portion (27) of said case or in the "back" portion (25) thereof, all three portions communicating so that the jumper connectors can be plugged into the cable connectors either directly or indirectly;
any optional series protection circuits (7), each of which is provided on a board (90) and assigned to series protecting at least one of the pairs of wires, and is equipped with two end connectors (93, 94) at opposite ends of the board, the end connectors being provided respectively with as many third contacts and fourth contacts as there are pairs of wires to be protected, being connected to the circuits on the board and being accessible from the ends, being complementary to each other, and having the same number of said pairs of pluggable points, said first series protection circuits (7) being optionally mounted in said intermediate portion, so that they can be plugged into the cable connectors (4) which are then already in place in said back portion and so that the jumper connectors received in said front portion can be plugged into the protection circuits.

2. A strip according to claim 1, characterized in that said insulating body (2) is partitioned, from said open front face to a back opposite second face, into identical compartments (20) separated by partitions (21), the compartments being subdivided into and together defining said front portion, said intermediate portion, and said back portion, and further being open facing said intermediate portion and said back portion over a third face of the insulating body.

3. A strip according to claim 2, characterized in that sets of runners (24, 26, 28) projecting into each of said compartments delimit said front portion, said intermediate portion, and said back portion between said front face and said back face of said insulating body.

4. A strip according to claim 3, characterized in that one of the sets of runners referred to as the "intermediate" runners (28) delimits said intermediate portion, so that the cable connector or said first series protection circuits can be mounted therein, and the corresponding connections can be made by plugging in.

5. A strip according to any one of claims 2 to 4, characterized in that said compartments (20) define the pitch of said cable connectors (4) between the opposite fourth faces of said insulating body, which fourth faces are parallel to the partitions (21).

6. A strip according to any one of claims 2 to 5, further including outer electromagnetic protection, said strip being characterized in that said outer electromagnetic protection (3) totally surrounds said insulating body, except for said front face thereof, is provided with a cable back inlet (14E), and is mounted to open at least facing said third face of said insulating body (2).

7. A strip according to claim 6, characterized in that said outer electromagnetic protection (3) includes a casing (13) and an opening back cap (14), the cap extending the casing and covering said third face when it is closed by being put into contact with said casing.

8. A strip according to claim 6 or 7, characterized in that an additional "ground" contact (143, 53) is associated with each of said pairs of contacts of the cable connectors (4), of the jumper connectors (5), and of the end connectors of the series protection circuits (7), and is accessible with the pair of contacts on the corresponding connector, thereby forming sets that are complementary from one of the connectors to one of the other connectors that can be plugged therein.

9. A strip according to claim 8, characterized in that each cable connector (4) further includes a grounding comb (48) retained on said insulating block (40) at the opposite end from said pluggable points, and connected both to the ground contacts (143) associated with the individual pairs of first contacts (142), and also to said outer electromagnetic protection (3).

10. A strip according to claim 9, characterized in that said grounding comb (48) includes at least one resilient rubbing tab (48A) at the end of said block for connecting to said outer electromagnetic protection (3) through the insulating body.

11. A strip according to any one of claims 8 to 10, characterized in that each jumper connector (5) further includes two varistors (54) mounted inside said box (50, 51), each varistor being connected between one of the contacts in the pair of second contacts (52) and the associated ground contact (53).

12. A strip according to any one of claims 5 to 11, characterized in that it includes at least one front bar (30) per compartment (20), the front bars being assigned to mounting said jumper connectors (5) in at least one "ready-for-connection" position in the front portion of said insulating body.

13. A strip according to claim 12, characterized in that each front bar (30) is provided with a series of slots (35) that are open to said front face of the insulating body and that are disposed at the pitch of the jumper connectors between said third face and the opposite face of said insulating body, and in that each jumper connector (5) further includes a lug (66) projecting from said box (50, 51) and received in one of said slots (35) for the purposes of holding the box.

14. A strip according to claim 13, characterized in that said lug (66) is terminated by an abutment (67) delimiting the end of the stroke of said lug in one of said slots (35) for a "connection" position in which said jumper connector is connected in said front portion of the insulating body (2).

15. A strip according to any one of claims 12 to 14, characterized in that each cable connector (5) has two identical rows of pairs of pluggable points for an even number n, in that two of said front bars (30) are associated with each compartment and are assigned to the jumper connectors disposed side-by-side in pairs between two bars in the front portion of the compartment.

16. A strip according to claim 15, characterized in that the insulating block (40) of each cable connector (4) is in the shape of a channel-section having a rectangular web (41) in which the n pairs of first contacts are in two rows over its length, the contacts projecting inside the channel-section and being accessible from the outside of the channel-section, and two side flanges on respective sides of the channel-section, each flange being a double flange formed of an outer flange (42) and of an inner flange (43) separated by a trough (46) receiving n/2 of the n pairs of wires, said n/2 pairs of wires being retained in stepped manner over the inner flange and corresponding to the n/2 pairs of contacts of the same side, to which contacts they are connected inside the channel-section.

17. A strip according to claim 15 or 16, characterized in that the insulating box (50, 51) of each jumper connector (5) is constituted by an equipped drawer (50) closed by a cover (51), the drawer having a back end wall (56) through which the contacts (52, 53) of the jumper connector pass, the contacts projecting inside the drawer and being accessible from the outside of said back end wall, and a bottom (55) through which the jumper is received and connected to the inside ends of the contacts in the drawer.

18. A strip according to claim 17, characterized in that said drawer (50) is made of two assemblable portions, namely a "fixed" portion (50A) to which at least said back end wall (56) and a first portion of the bottom referred to as the "back half-bottom" (55A) belong, and a "moving" portion to which at least a second portion of said bottom referred to as the "front half-bottom (55B) belongs, said back half-bottom and said front half-bottom partially overlapping in a "middle join" region, the front half-bottom (55B) having holes (72, 73) for inserting the wires of the jumper, and the back half-bottom (55A) having corresponding slots, the holes and the slots facing each other in said join region to enable the wires of the jumper to be connected to the inside ends of the contacts in said drawer.

19. A strip according to any one of claims 1 to 18, characterized in that each of said series protection circuits (7) includes at least one assembly (91, 92) formed by electromagnetic filtering components or by a surge suppressor mounted on said board (90) and connected to said end connectors (93, 94).

20. A strip according to any one of claims 1 to 19, characterized in that the various contacts of the cable connectors (4), of the jumper connectors (5), and of the end connectors of the series protection circuits (7) are all identical, each contact (100) being flat and having a hermaphrodite coupling end (103, 104) which is accessible on the corresponding connector, and an opposite end having an insulation-displacing fork (105).
